# EUROPEAN PATENT APPLICATION

(11) **EP 1 422 932 A2**
(43) Date of publication of application: **26.05.2004**
(21) Application number: 03256916.2
(22) Date of filing: 31.10.2003
(51) Int. Cl.: H04N 5/225

(54) **Dual mode digital camera**

(30) Priority: 20.11.2002 KR 2002072564
(71) Applicant: SAMSUNG ELECTRONICS CO., LTD., Suwon-City, Kyungki-do (KR)
(72) Inventor: Park, Jong-tae, Suwon-city Gyunggi-do (KR)
(74) Representative: Geary, Stuart Lloyd

(57) **Abstract**

Disclosed is an image-capturing device and a control method therefor capable of adjusting view angles. The image-capturing device comprises a camera part having a first camera adapted to capture images of a subject through a first zoom lens if a first image-capturing mode is selected, and a second camera adapted to capture images through a second zoom lens if a second image-capturing mode is selected The image capturing device also includes a detection unit for detecting the position of the first and the second zoom lenses. A control unit detects the position of the first and the second zoom lenses for the first and the second image-capturing modes if the image-capturing modes are determined to be changed from the first to the second image-capturing mode, and sets a detected value of the position of the first zoom lens to a value of the position of the second zoom lens. The image-capturing device can advantageously eliminate the inconvenience of having to additionally adjust view angles when changing lenses.

## Description

The present invention relates to an image-capturing device and a control method therefor. More particularly, the present invention lates to an image-capturing device and a control method therefor for adjusting view angles to be changed together with lens replacements when lenses for capturing pictures of subjects are replaced.

Digital video cameras (DVC) are image-capturing devices primarily for recording and reproducing moving pictures. Some DVCs can capture still images but the image quality is poor compared to images captured by a digital stills camera (DSC). Furthermore, digital stills cameras use recording media having relatively small capacities compared with DVCs.

Digital image-capturing devices such as digital stills cameras, digital video cameras, and so on, have become popular and have achieved widespread acceptance in recent years. Recent trends show that users tend to use a digital video camera together with a digital stills camera. Accordingly, an image-capturing device performing the functions of a digital stills camera by use of a digital video camera has been developed.

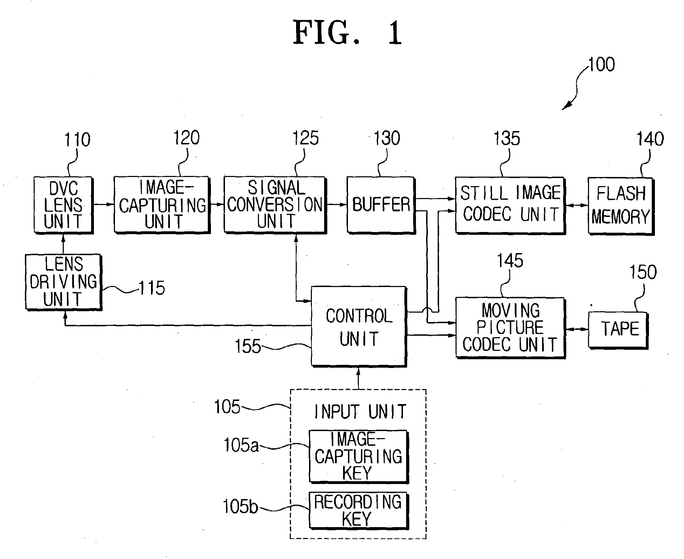

Figure 1 is a block diagram showing a conventional image-capturing device combining the functions of a digital video camera and a digital stills camera.

Referring to Figure 1, an image-capturing device 100 that has an input unit 105, a DVC lens unit 110, a lens driving unit 115, an image-capturing unit 120, a signal conversion unit 125, a buffer 130, a still image codec unit 135, a flash memory 140, a moving picture codec unit 145, a tape 150 and a control unit 155.

The input unit 105 is provided with an image-capturing key 105a for selecting a still image mode, a recording key 105b for selecting a moving picture mode and a plurality of keys (not shown) which a user can operate to control the image-capturing device 100.

The DVC lens unit 110 consists of a zoom lens and a focus lens for adjusting the focus in dependence on subject and zoom lens positions.

The lens driving unit 115 is a motor or motors for moving the zoom lens and/or focus lens under the control of the control unit 155, which will be described later.

The image-capturing unit 120 converts the optical image produced by the DVC lens unit 110 into an electronic signal using a charge coupled device.

The signal conversion unit 125 removes noise from the electronic signal generated by the image-capturing unit 120 and amplifies it in order for the level of an image signal converted into an electronic signal to be uniformly output. Furthermore, the signal conversion unit 125 converts the analogue image signal, generated by the image capturing device 120, into a digital image signal.

The buffer 130 temporarily stores the signal output from the signal conversion unit 125.

The still image codec unit 135 compresses still image signals received from the buffer 130 using of a coding format such as JPEG. The compressed still image data is stored in the flash memory 140. Furthermore, the still image codec unit 135 decompresses compressed image data, stored in the flash memory 140, under the control of the control unit 155 if the input unit 105 receives a reproduction command signal.

The moving picture codec unit 145 compresses moving picture signals received from the buffer 130 under the control of the control unit 155 using of a coding format such as MPEG. Compressed moving picture coding data is stored on the tape 150. Furthermore, the moving picture codec unit 145 decompresses the compressed moving picture data, stored on the tape 150, under the control of the control unit 155 if the input unit 105 receives a reproduction command signal.

The control unit 155 enables an image signal stored in the buffer 130 to be stored in the flash memory 140 or the tape 150 according to the selection of the image-capturing key 105a or the recording key 105b.

However, this conventional image-capturing device 100 captures moving pictures as its main function and still images as an auxiliary function. As a result, conventional DVCs capture and store images that have a resolution and image quality that are excellent for moving pictures, but which are poor for still images, relative to dedicated digital stills cameras.

Accordingly, a combination-type image-capturing device (not shown) combining a digital stills camera and a digital video camera has been developed. However, the digital stills camera and the digital video camera often have different view angles for image-capturing from each other. Thus, if a user wants to capture moving pictures of a subject by use of the digital video camera in the middle of taking still images using of the digital stills camera, the user inconveniently needs to adjusts a view angle in order to make the image-capturing view angle for the digital stills camera equal to the image-capturing view angle for the digital video camera. This causes unnecessary inconvenience for the user.

Accordingly, it is an aspect of the present invention to provide an image-capturing device and a control method therefor capable of adjusting view angles, to thereby solve the inconvenience of additionally adjusting view angles when lenses used for capturing pictures of a subject are swapped.

In order to achieve the above aspect, an image-capturing device according to the present invention comprises a camera part, a mode sensing unit, a detection unit, a control unit, and a storage unit.

The camera part has a first camera for capturing images of a subject at a position of a first zoom lens if a first image-capturing mode is selected, and a second camera for capturing images of the subject at a position of a second zoom lens if a second image-capturing mode is selected. The camera part is provided on a main body thereof to rotate by a certain angle. The mode sensing unit senses an image-capturing mode corresponding to rotations of the camera part. The detection unit detects the position of the first zoom lens for the first image-capturing mode and the position of the second zoom lens for the second image-capturing mode. The control unit controls the detection unit to detect the position of the first zoom lens previously selected for the first image-capturing mode. The control unit also controls the detection unit to detect the position of the second zoom lens subsequently selected for the second image-capturing mode if the image-capturing modes are decided to be selected and changed from the first image-capturing mode to the second image-capturing mode based on an output signal of the mode sensing unit. The control unit compares the positions of the first and second zoom lenses detected from the detection unit, and, if it is determined that the positions are different, the control unit sets a value of the position of the first zoom lens to a value of the position of the second zoom lens. The storage unit is detachably mounted on the main body, and stores an image signal for the subject image-captured through the first and second cameras.

In more detail, the image-capturing device further comprises a view angle calculation unit for calculating view angles for the positions of the first and second zoom lenses respectively. Also, the control unit decides whether the magnifications of the first and second zoom lenses corresponding to the first and second image-capturing modes respectively are the same. If the magnifications of the first and second zoom lenses are determined to be different, the control unit compares view angles sequentially calculated from the view angle calculation unit with a previously calculated view angle of the first zoom lens while moving the second zoom lens in a certain direction. The control unit then sets a value of the position of the second zoom lens, the position indicating a minimum value in a view angle difference between the first and second zoom lenses.

Further, the first camera is preferably a digital stills camera for capturing still images in the first image-capturing mode. The second camera is a digital video camera for capturing moving pictures in the second image-capturing mode. The first and the second cameras are preferably disposed opposite to each other.

In the meantime, in order to achieve the above and other aspects of the invention, a control method for an image-capturing device, according to an embodiment of the present invention, comprises the step of detecting the position of the first zoom lens previously selected for the first image-capturing mode. If the image-capturing modes are decided to be selected and changed from the first image-capturing mode to the second image-capturing mode based on an output signal of the mode sensing unit, the control method further comprises detecting the position of the second zoom lens subsequently selected for the second image-capturing mode, and setting a value of the position of the first zoom lens to a value of the position of the second zoom lens if the positions of the first and second zoom lenses detected from the detection unit are compared to each other and determined to be different from each other.

In more detail, the control method further comprises deciding whether the magnifications of the first and second zoom lenses corresponding to the first and second image-capturing modes respectively are the same. If the image-capturing modes are decided to be selected and changed from the first image-capturing mode to the second image-capturing mode based on an output signal of the mode sensing unit, the control method includes calculating view angles for the positions of the first and second zoom lenses, respectively. If the magnifications of the first and second zoom lenses are decided to be different, comparing sequentially calculated view angles with a previously calculated view angle of the first zoom lens while moving the second zoom lens in a certain direction. The control method also preferably includes setting a value of the position of the second zoom lens, the position indicating a minimum value in a view angle difference between the view angle of the first zoom lens and the sequentially calculated view angles of the second zoom lens.

An embodiment of the present invention will now be described, by way of example, with reference to Figures 2 to 5 of the accompanying drawings, in which:
Figure 1 is a block diagram of a conventional image-capturing device combining the functions of a digital video camera with those of a digital stills camera;
Figure 2 is a perspective view of an image-capturing device combining a digital stills camera with a digital video camera according to the present invention;
Figure 3 is a block diagram of the image-capturing device of Figure 2;
Figure 4 is a schematic perspective view of an exemplary turnover switch for the mode sensing unit shown in Figure 3; and
Figure 5 is a flowchart illustrating a method for controlling a control unit adjusting image-capturing view angles for the image-capturing device when image-capturing modes are changed, as illustrated in Figure 3.

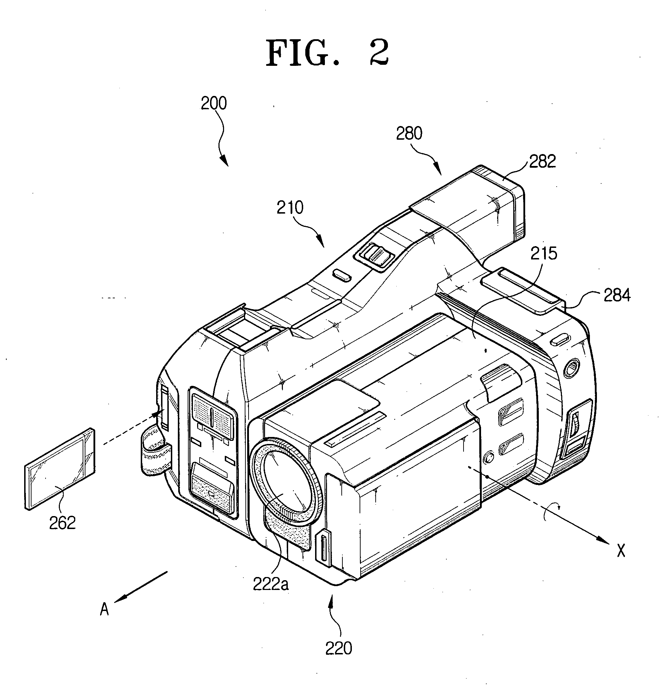

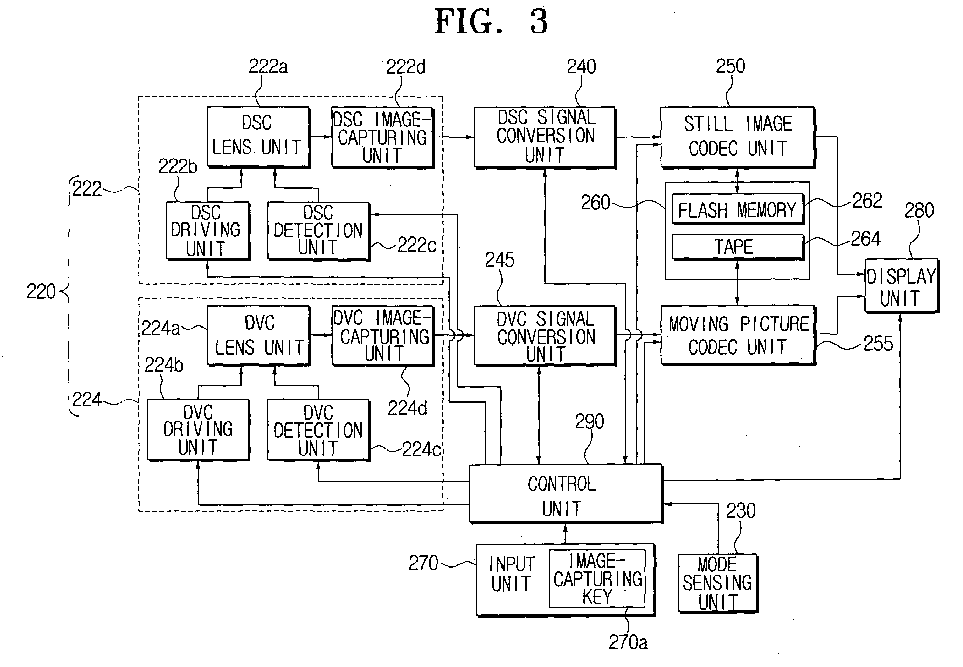

Referring to Figures 2 and 3, an image-capturing device 200 according to the present invention has a main body 210, a camera part 220, a mode sensing unit 230, a DSC signal conversion unit 240, a DVC signal conversion unit 245, a still image codec unit 250, a moving picture codec unit 255, a storage unit 260, an input unit 270, a display unit 280, and a control unit 290.

The camera part 220 is provided with a housing 215 mounted so that it can rotate through range of angles. The camera part 220 also includes a DSC 222 for capturing still images and a DVC 224 for capturing moving pictures.

The DSC 222 and the DVC 224 are preferably disposed opposite each other. In other words, as shown in Figure 2, a DSC lens unit 222a of the DSC 222 is mounted at one end of the housing 215 to face in one direction, and a DVC lens unit 224a (not visible in Figure 2) of the DVC 224 is mounted on the opposite end of the housing 215 facing in the opposite direction.

Accordingly, the camera part 220 can be rotated clockwise or anticlockwise about an axis X. In the present preferred embodiment, the housing 215 can be manually rotates through 180° so that DSC lens unit 222a and the DVC lens unit 224a exchange places and the viewing direction remains unchanged.

Nevertheless, the DSC lens unit 222a and the DVC lens unit 224a of the camera part 220 can capture images at any angular position. For example, the camera part 220 can capture images of a subject even though the lengthwise direction of the camera part 220 rotates to be perpendicular to the lengthwise direction of the main body 210.

As illustrated in Figure 3, the DSC 222 includes the DSC lens unit 222a, a DSC driving unit 222b, a DSC detection unit 222c, and a DSC image-capturing unit 222d.

The DSC lens unit 222a is for capturing still images and has at least one zoom lens and at least one focus lens (not shown) for adjusting the focus in dependence on the distance between a subject and the imaging device.

The DSC driving unit 222b moves the DSC zoom lens (not shown) and the DSC focus lens under the controls of the control unit 290 which will be described in further detail below.

The DSC detection unit 222c is a sensor for detecting the position of the DSC zoom lens and the DSC focus lens. The DSC detection unit 222c is preferably constructed using a photo interrupter, or the like.

The DSC image-capturing unit 222d outputs an analogue electrical signal corresponding to the optical image, produced by the DSC zoom lens (not shown) and the DSC focus lens (not shown), using of charge coupled devices.

The DSC 222 captures images when the camera part 220 is rotated so that the DSC lens unit 222a is to the fore.

The DVC 224 includes the DVC lens unit 224a, a DVC driving unit 224b, a DVC detection unit 224c, and a DVC image-capturing unit 224d.

The DVC lens unit 224a is for capturing moving pictures, and has a zoom lens (not shown) and a focus lens (not shown) for adjusting the focus in dependence on the distance between a subject and the imaging device.

The DVC driving unit 224b moves the DVC zoom lens (not shown) and the DVC focus lens (not shown) under the control of the control unit 290 which will be described in further detail below.

The DVC detection unit 224c is a sensor for detecting the positions of the DVC zoom lens (not shown) and the DVC focus lens (not shown). The DVC detection unit 224c is preferably constructed using a photo interrupter or the like.

The DVC image-capturing unit 224c outputs an analogue electrical signal corresponding to the optical image, produced by the DVC zoom lens (not shown) and the DVC focus lens (not shown), using of charge coupled devices..

The DVC 224 captures images when the camera part 220 is rotated so that the DVC lens unit 224a is to the fore.

The mode sensing unit 230 senses the image-capturing mode from the angular position of the camera part 220.

The mode sensing unit 230 may be implemented by a turnover switch which turns off either the DSC 222 or the DVC 224 and turns on the other depending upon the angular position of the camera part 220 relative to the main body 210.

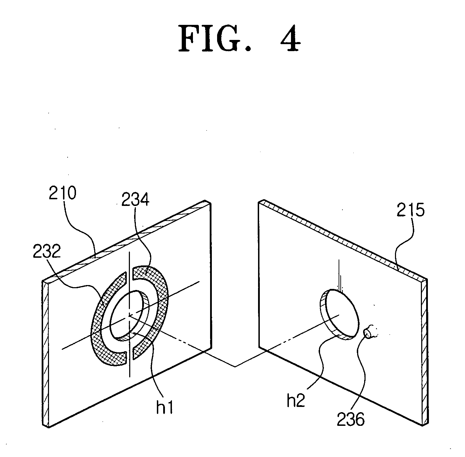

Referring to Figure 4, the turnover switch includes first and second contact patterns 232, 234, provided on the main body 210, and a contact terminal 236, provided on the housing 215. The contact terminal 236 comes into contact with either the first or the second contact pattern 232, 234 depending on the angular position of the camera part 220 relative to the main body 210. The main body 210 and the housing 215 are coupled so that they can rotate relative to each other with openings h1 and h2 facing each other.

The first contact pattern 232 is connected to the DSC 222 and the second contact pattern 234 is connected to the DVC 224. If the contact terminal 236 is located at a position where it contacts with the first contact pattern 232, the DSC 222 is turned on and the DVC 224 is turned off. Accordingly, the subject scene is captured by the DSC 222 and the control unit 290 decides that the image-capturing mode is the still image mode.

Referring back to Figures 2 and 3, the main body 210 has the DSC signal conversion unit 240, DVC signal conversion unit 245, still image codec unit 250, moving picture codec unit 255, storage unit 260, input unit 270, display unit 280, and control unit 290 therein.

The DSC signal conversion unit 240 and the DVC signal conversion unit 245 respectively remove noise from the signals received from the DSC image-capturing unit 222d and the DVC image-capturing unit 224d. The DSC signal conversion unit 240 and the DVC signal conversion unit 245 also amplify these signals so that the levels of the converted image signals are even. Furthermore, the DSC signal conversion unit 240 and the DVC signal conversion unit 245 respectively digitise the analogue images and generate automatic control data by a digital process.

The still image codec unit 250 compresses still image signals output from the DSC signal conversion unit 240 under the control of the control unit 290 using a compression format such as JPEG. The compressed still image data is stored in the flash memory 262 of the storage unit 260.

The moving picture codec unit 255 compresses moving picture signals output from the DVC signal conversion unit 245 under the control of the control unit 290 using a compression format such as MPEG. The compressed moving picture data is stored on the tape 264 of the storage unit 260.

If the input unit 270 receives a reproduction command signal in respect of a stored image signal, the still image codec unit 250 or the moving picture codec unit 255, as appropriate, decompresses the compressed data stored in the flash memory 262 or on the tape 264 under the control of the control unit 290. The input unit 270 will be described in further detail below.

For example, if the input unit 270 receives a reproducing command signal for a still image, the still image codec unit 250 decompresses coded data for a still image stored in the flash memory 262 and sends the decoded signal to the display unit 280.

The input unit 270 has an image-capturing key 270a for applying an image-capturing command signal to the control unit 290 and control buttons (not shown) for starting and controlling other functions.

The display unit 280 has a view finder 282 and an LCD panel 284 which is provided at back of the main body 210. The display unit 280 displays captured or decompressed images through the DSC 222 or the DVC 224 under the control of the control unit 290.

The control unit 290 controls the overall operations of the image-capturing device by using various control programs stored in the storage unit 260 and automatic control data output from the DSC signal conversion unit 240 or the DVC signal conversion unit 245.

The control unit 290 determines the image-capturing mode on the basis on the output signal of the mode sensing unit 230 and operates the camera part 220 accordingly. For example, if a signal indicating that the camera is in still image mode is received from the mode sensing unit 230, the control unit 290 determines that the image-capturing mode of the camera part 220 is still image mode.

When an image-capturing command signal is applied from the image-capturing key 270a, the control unit 290 operates the DSC 222. If the input unit 270 inputs a recording command signal, the control unit 290 controls the still image codec unit 250 to compress the signal image signal and, if a reproducing command signal is applied, it controls the still image codec unit 250 to decompress a compressed image signal and display it on the display unit 280.

The operation of the control unit 290 to adjust view angles automatically when the image-capturing device 200 is powered on and the image capturing mode is changed will now be described.

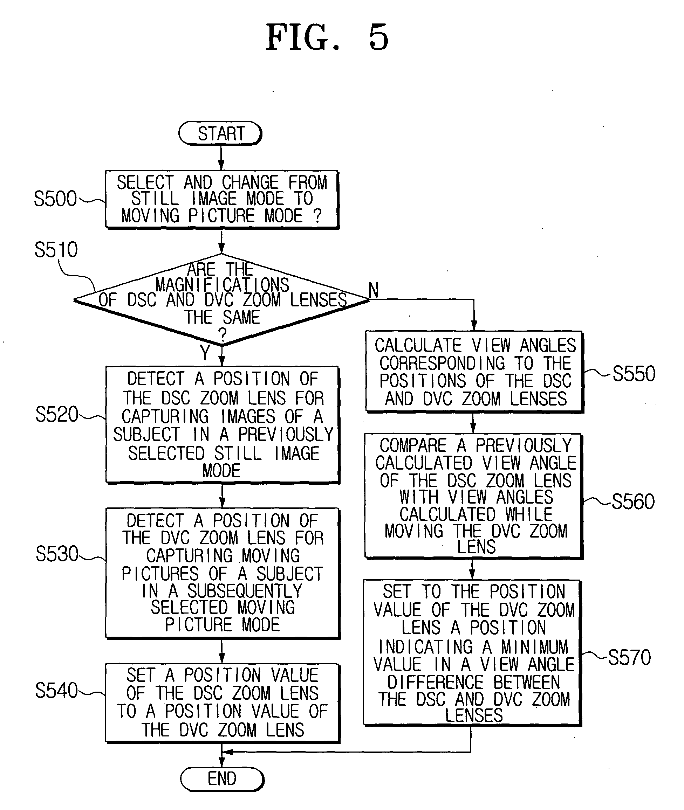

Referring to Figures 3 and 5, when power is applied to the image-capturing device 200, the control unit 290 determines the current image-capturing mode on the basis of the signal received from the mode sensing unit 230. For example, if the still image mode has been selected as the current image-capturing mode of the camera part 220 prior to the powering of the image-capturing device 200, the control unit 290 determines that the current image-capturing mode is the still image mode.

While the device 200 is in still image mode, if a user exchanges the cameras by rotating the camera unit 220, the mode sensing unit 230 outputs a signal notifying the control unit 290 of an image-capturing mode change.

When the image-capturing mode change signal is received by the control unit 290 (S500), the control unit 290 determines whether the magnification level of the DSC zoom lens (not shown) and the DVC zoom lens (not shown) are the same (S510).

As a result of the determination made in step S510, if the magnification levels of the DSC zoom lens and the DVC zoom lens are determined to be the same, the control unit 290 controls the DSC detection unit 222c to detect the position of the DSC zoom lens selected earlier (S520). Furthermore, the control unit 290 controls the DVC detection unit 224c to detect a position of the DVC zoom lens selected subsequently (S530).

After steps S520 and S530 are completed, the control unit 290 compares the positions of the DSC zoom lens and the DVC zoom lens with each other. If the positions are determined to be different from each other, the control unit 290 sets a value of the detected position for the DSC zoom lens selected earlier as a value of the position for the DVC zoom lens selected later (S540). Described in more detail, the control unit 290 calculates the difference between the position value for the DSC zoom lens and the position value for the DVC zoom lens which are detected, in the steps S520 and S530, and moves the DVC zoom lens by the difference value.

For example, if the position value of the DSC zoom lens is larger than the position value of the DVC zoom lens, the image-capturing view angle of the DSC zoom lens is smaller than the image-capturing view angle of the DVC zoom lens, so the control unit 290 controls the DVC driving unit 224b to move the DVC zoom lens in a high magnification direction (that is, in a direction in which the view angle becomes smaller) by an amount equal to the calculated the difference value.

If the magnifications of the DSC zoom lens and the DVC zoom lens are decided to be different from each other in the step S510, the control unit 290 calculates image-capturing view angles corresponding to the positions of the previously selected DSC zoom lens and the DVC zoom lens (S550).

If step S550 is completed, the control unit 290 drives the DVC driving unit 224b, sequentially calculates view angles while moving the DVC zoom lens in a certain direction, and compares the sequentially calculated view angles of the DVC zoom lens with the view angle of the DSC zoom lens calculated in advance in the step S550 (S560).

If a position is detected in step S560 that indicates the minimum value in a view angle difference between the DSC zoom lens and the DVC zoom lens, the control unit 290 stops the driving of the DVC driving unit 224b at the position indicating the minimum value, and sets the position indicating the minimum value as a position value of the DVC zoom lens (S570).

Preferably, the combination-type image-capturing device 200 combining the DSC 222 and the DVC 224 as above stores zoom lens position values for an image-capturing mode prior to its power-off or mode changes. By doing so, a user can conveniently use the image-capturing device 200 in case that he or she changes the positions of the DSC 222 and the DVC 224 and then turns on the image-capturing device 200.

Further, the combination-type image-capturing device 200 combining the DSC 222 and the DVC 224 as above can be effectively used in cases where a user wants to capture still images with the DSC 222 in the middle of capturing images of a subject at a certain view angle with the DVC 224. That is, when a user replaces the DVC 224 with the DSC 222 to capture images of a subject, the image-capturing device 200 can eliminate troublesome extra view angle manipulations for the user in order to have the same view angle as that for the DVC 222.

Further, the image-capturing device (not shown) according to another embodiment of the present invention is applicable to a monitoring device (not shown) for monitoring and taking pictures of subjects by using plural cameras, that is, plural zoom lenses. That is, in case that a second monitoring device is used to monitor/take pictures of a subject in the middle of monitoring/taking pictures of the subject through a first monitoring device, a zoom lens position of the second monitoring device is controlled to have a photographing view angle closest to a photographing view angle for the first monitoring device, so that a user does not have to additionally adjust a view angle.

In the image-capturing device and the control method therefor capable of adjusting view angles according to an embodiment of the present invention, when a position of a lens for capturing images of a subject is changed, the image-capturing device can automatically adjust the lens position after the change in order for an image-capturing view angle set for the lens prior to the change to be the same as or close to an image-capturing view angle set for the lens after the change. Accordingly, the view angle is adjusted and kept without users' additional manipulations, so that troublesome extra manipulations can be eliminated that make the view angle the same as before for a subject being image-captured after the lens changes.

## Claims

1. An image-capturing device, comprising:
a camera part having a first camera adapted to capture images of a subject at a position of a first zoom lens if a first image-capturing mode is selected and a second camera adapted to capture images of the subject at a position of a second zoom lens if a second image-capturing mode is selected;
a mode sensing unit for sensing an image-capturing mode of the camera part;
a detection unit for detecting the position of the first zoom lens for the first image-capturing mode and the position of the second zoom lens for the second image-capturing mode; and
a control unit for controlling the detection unit to detect the position of the first zoom lens previously selected for the first image-capturing mode and the position of the second zoom lens subsequently selected for the second image-capturing mode if the image-capturing modes are selected and changed from the first image-capturing mode to the second image-capturing mode based on an output signal of the mode sensing unit, comparing the positions of the first and second zoom lenses detected from the detection unit, and, if the positions are determined to be different, setting a value of the position of the first zoom lens to a value of the position of the second zoom lens.

2. The image-capturing device as claimed in claim 1, further comprising a view angle calculation unit for calculating view angles for the positions of the first and second zoom lenses respectively, wherein the control unit decides whether the magnifications of the first and second zoom lenses corresponding to the first and second image-capturing modes respectively are the same, and if they are determined to be different, compares view angles sequentially calculated from the view angle calculation unit with a previously calculated view angle of the first zoom lens while moving the second zoom lens in a certain direction, and sets to a value of the position of the second zoom lens the position indicating a minimum value in a view angle difference between the first and second zoom lenses.

3. The image-capturing device as claimed in claim 1, wherein the first camera is a digital stills camera for capturing still images in the first image-capturing mode, and the second camera is a digital video camera for capturing moving pictures in the second image-capturing mode.

4. The image-capturing device as claimed in claim 1, wherein the first and second cameras are disposed opposite to each other.

5. The image-capturing device as claimed in claim 1, further comprising a storage unit, detachably mounted on a main body thereof, for storing an image signal for the subject image-captured through the first and second camera.

6. The image-capturing device as claimed in claim 1, wherein the camera part is provided on a main body thereof to rotate by a certain angle.

7. The image-capturing device as claimed in claim 1, wherein the mode sensing unit senses the image-capturing mode in correspondence to rotations of the camera part.

8. A control method for an image-capturing device including a camera part having a first camera adapted to capture images of a subject at a position of a first zoom lens if a first image-capturing mode is selected and a second camera adapted to capture images of the subject at a position of a second zoom lens if a second image-capturing mode is selected, and provided on a main body thereof to rotate by a certain angle; a mode sensing unit for sensing an image-capturing mode corresponding to rotations of the camera part; a detection unit for detecting the positions of the first and second zoom lenses; a storage unit for storing an image signal for the image-captured subject; and a control unit for controlling the above respective part and units, the method comprising the steps of:
(a) detecting the position of the first zoom lens previously selected for the first image-capturing mode if the image-capturing modes are selected and changed from the first image-capturing mode to the second image-capturing mode based on an output signal of the mode sensing unit;
(b) detecting the position of the second zoom lens subsequently selected for the second image-capturing mode; and
(c) setting a value of the position of the first zoom lens to a value of the position of the second zoom lens if the positions of the first and second zoom lenses detected from the detection unit in the steps (a) and (b) are compared to each other and determined to be different from each other.

9. The control method as claimed in claim 8, further comprising steps of:
(d) if the image-capturing modes are decided to be selected and changed from the first image-capturing mode to the second image-capturing mode based on an output signal of the mode sensing unit, deciding whether the magnifications of the first and second zoom lenses corresponding to the first and second image-capturing modes respectively are the same;
(e) calculating view angles for the positions of the first and second zoom lenses, respectively, if the magnifications of the first and second zoom lenses are determined to be different in the step (d);
(f) comparing sequentially calculated view angles with a previously calculated view angle of the first zoom lens while moving the second zoom lens in a certain direction; and
(g) setting to a value of the position of the second zoom lens the position indicating a minimum value in a view angle difference between the view angle of the first zoom lens and the sequentially calculated view angles of the second zoom lens.

10. The control method as claimed in claim 8, wherein the first camera is a digital stills camera for capturing still images in the first image-capturing mode, and the second camera is a digital video camera for capturing moving pictures in the second image-capturing mode.
